# EUROPEAN PATENT APPLICATION

(11) **EP 1 036 584 A1**
(43) Date of publication of application: **20.09.2000**
(21) Application number: 00302003.9
(22) Date of filing: 13.03.2000
(51) Int. Cl.: B01D 29/15, B01D 35/16, B01D 46/24

(54) **Filter element and filter**

(30) Priority: 15.03.1999 GB 9905929
(71) Applicant: Fram Europe Limited, Pontyclun Mid Glamorgan CF7 8YU (GB)
(72) Inventor: Mules, Robert Stephen, Pontyclun, Mid Glamorgan CF7 8YU (GB)
(74) Representative: Price, Nigel John King

(57) **Abstract**

A gas liquid filter element including a radially outwardly extending flexible wiper seal 6, which engages the inner side wall 13 of the filter chamber 11 of filter housing 10, so that when replaced, solid residue is removed from the chamber.

## Description

This invention relates to liquid or gas filter elements and filters.

Conventional filter elements often leave behind filtered residue when they are removed from their housings. When a fresh filter element is inserted into the housing, the residue can collect in the filtered fluid exit. This situation can cause damage to or failure of machinery, so it is often necessary to clean out the housing when replacing a filter element which can be time consuming.

The present invention provides a filter comprising a filter element and a filter housing, said filter housing having a chamber open at one end, said filter element comprising two end surfaces and a hollow passage which is open at at least one of said end surfaces and which is at least partly surrounded by a filter medium, and said filter element being adapted for insertion into said chamber of said filter housing with the end surfaces substantially perpendicular to the chamber side walls; said filter characterised in that said filter element further comprises a flexible wiper seal protruding generally radially outwardly from said filter element at or adjacent to one of said ends; and in that said flexible wiper seal is arranged to be bent by said side walls in a direction opposite to the direction of insertion when said filter element is inserted into said chamber and arranged for engagement with said chamber side walls when said filter element is removed from said chamber.

In this way substantially all filtered residue can be removed from the filter housing when the filter element is removed. Residue which collects on the side walls of the housing can also be removed. The flexible nature of the wiper, and the fact that it bends in the direction of removal of the filter element means that an excellent cleaning action on the chamber side walls results.

The filter element of the present invention is particularly advantageous for use in filters where just the filter element is designed to be removed during servicing. This is because the filter can be serviced quicker than with conventional filter elements since the filter housing does not need to be washed when the filter element is replaced.

By fixing the flexible wiper to the filter element, the wiper is replaced on every filter change. If the filter is an oil filter this can be important because the material of the wiper seal can harden in such fluids. Furthermore, this type of filter element can be used with filter housings where a centre tube, which is designed to be surrounded by the filter element when the filter element is inserted into the housing, forms an integral part of the filter housing or is permanently snaplocked to the filter housing.

The flexible wiper seal may extend along the whole of an end surface and even extend radially inwardly into the hollow passage. In this way, a good seat between the filter element and the centre tube, as well as the filter element and the housing can be achieved.

If the outermost layer of the wiper is made of felt it advantageously forms the main clean-to-dirty-side seal at the closed end of the filter housing.

The invention will now be described by way of example with reference to the following drawings in which:
Fig. 1 is a side view of the filter element before insertion into a filter housing;
Fig. 2 is a side view of the filter element inserted into a first embodiment of the filter housing; and
Fig. 3 is a side view of the filter element inserted into a second embodiment of the filter housing.

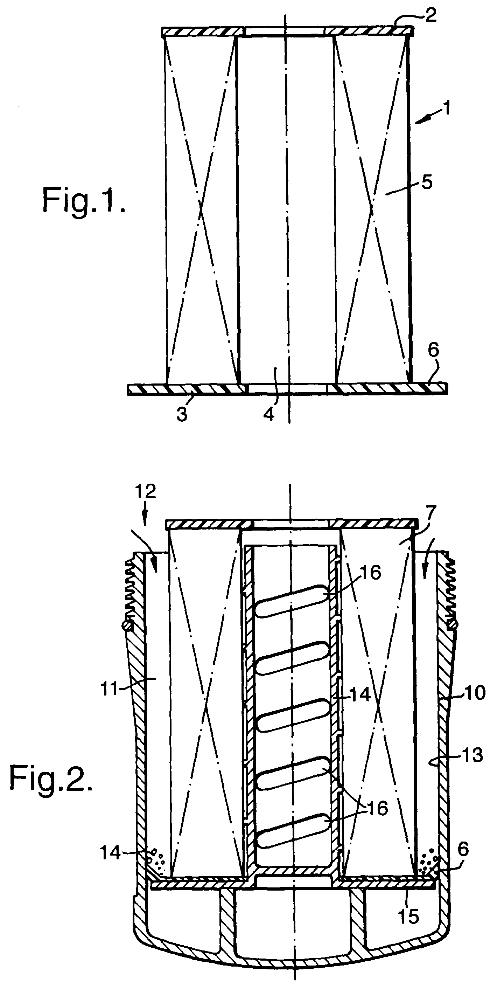

The filter element 1 shown in Fig. 1 has the same features as a conventional gas or liquid filter element, namely a top end 2 and a bottom end 3 of substantially the same shape and size and a hollow passage 4 surrounded by a tubular filter medium 5. A flexible wiper seal 6 protrudes generally radially outwardly from said filter element adjacent to the bottom end 3. Preferably the flexible wiper seal 6 is parallel to and in the same plain as the bottom end 3. Any flexible material, for example, rubber or felt can be used for the flexible wiper seal 6 which may form an integral part of or may be attached to the bottom end 3. The wiper seal 6 may be made of more than one material, for example of a sandwich of rubber and felt the rubber providing the required degree of flexibility and stiffness, and the felt providing the main clean to dirty side seal. It is possible that the flexible wiper seal 6 is attached to or forms part of another piece of the filter element for example a wire mesh surrounding the filter medium 5.

As shown in Fig. 2, when the filter element 1 is inserted, bottom end 3 first into the open end of a cylindrical chamber 11 of the filter housing 10, the flexible wiper seal 6 is bent in a direction opposite to the direction of insertion 12 by the side walls 13 of the chamber.

In the first embodiment of filter housing 10 as shown in Figure 2, a centre tube 14 to which a base plate 15 is attached does not form an integral part of the filter housing 10. The centre tube 14 has a plurality of through holes 16. During operation, fluid is forced from outside the filter element 1, through the filter element 1 into the centre tube 14 via the through holes 16.

During operation, when the filter element 1 is inserted in the filter housing 10 the bottom end 3 of the filter element 1 is in contact with the base plate 15. The base plate 15 locates the filter element 1 correctly.

Optionally, the flexible wiper seal 6, as well as protruding generally radially outwardly from said filter element 1 adjacent to the bottom end 3, extends along the entire bottom end 3 of the filter element 1. The flexible wiper seal 6 may even extend radially inwardly beyond the filter element 1 into the hollow passage 4. In this way, the flexible wiper seal 6 also makes a seal between the centre tube 14 and filter element 1.

During operation, fluid is sucked through the filter from the outer surface 7 of the filter into the hollow passage 4. Residue 14 collects on the outside of the filter 7 and on the housing side walls 13. Some residue may come unstuck and fall off When the filter element 1 is removed from the chamber 11, the flexible wiper seal 6 remains bent and in contact with the side walls 13 so that substantially all residue 14 between the side walls 13 and the outside of the filter 7 is scraped out. By adjusting the amount by which the wiper seal 6 protrudes outwardly from the filter element 1 and the difference in the diameter of the filter element 1 and the inner diameter of the cylindrical chamber 11 of the filter housing 10, the angle the wiper seal 6 makes with the side walls 13 of the chamber 11 can be adjusted. An optimum angle for scraping residue off the side walls 13 during extraction of the filter element and for keeping a tight seal against the side walls 13 during normal operation can be chosen.

In the first embodiment of filter housing 10, the centre tube 14 and base plate 15 may be removed during servicing for cleaning. With the flexible wiper seal attached to the filter element 1, this should however not be necessary during routine maintenance.

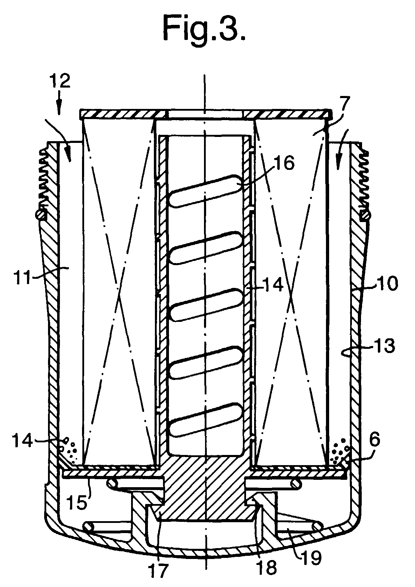

A second embodiment of filter housing 10 is shown in Figure 3. In this embodiment the centre tube 14 and base plate 15 are held permanently to the filter housing by a snap link 17,18. The centre tube 14 and base plate 15 are forced away from the sealed end of the cylindrical chamber 11 by spring 19 which acts against the sealed end of the cylindrical chamber 11 and the adjacent face of base plate 15. In this embodiment, the centre tube 14 and base plate 15 cannot be removed from the filter housing 10 for cleaning.

## Claims

1. A filter comprising a filter element (1) and a filter housing (10), said filter housing (10) having a chamber (11) open at one end, said filter element (1) comprising two end surfaces (2, 3) and a hollow passage (4) which is open at at least one of said end surfaces (2, 3) and which is at least partly surrounded by a filter medium (5), and said filter element (1) being adapted for insertion into said chamber (11) of said filter housing (10) with the end surfaces (2, 3) substantially perpendicular to the chamber side walls (13);
characterised in that said filter element (1) further comprises a flexible wiper seal (6) protruding generally radially outwardly from said filter element (1) at or adjacent to one of said ends (2, 3); and in that said flexible wiper seal (6) is arranged to be bent by said side walls (13) in a direction opposite to the direction of insertion when said filter element (1) is inserted into said chamber (11) and arranged for engagement with said chamber side walls (13) when said filter element (1) is removed from said chamber (11).

2. The filter of claim 1 characterised in that said wiper seal (6) is made of rubber.

3. The filter of claim 1 characterised in that said wiper seal (6) is made of felt.

4. The filter element of claim 1 characterised in that said wiper seal (6) is made of rubber and felt.

5. The filter of any one of the preceding claims characterised in that the filter element (1) is an air filter element.

6. The filter of any of claims 1 to 4 characterised in that the filter element (1) is a liquid filter element.

7. The filter element of any one of the preceding claims characterised in that said filter housing (10) further comprises a centre tube (14) which, in operation, is surrounded by said filter medium (5).

8. The filter of claim 7 characterised in that said centre tube (14) has a plurality of through holes (16).

9. The filter of claim 7 or claim 8 characterised in that a base plate (15) is attached at one end of said centre tube (14) substantially perpendicular to the axis of said centre tube (14).

10. The filter of claim 9 characterised in that said base plate (15) and centre tube (14) are permanently attached to said filter housing (10).

11. The filter of claim 9, characterised in that said base plate (15) and centre tube (14) are arranged to be removable from said filter housing (10).

12. The filter of any one of claims 7 to 11, characterised in that said flexible wiper seal (6) covers substantially all of said one of said ends (2, 3).

13. The filter according to claim 12, characterised in that said flexible wiper seal (6) protrudes radially inwardly from said filter element (1) and is adapted for engagement with said centre tube (14) when said filter element (1) is inserted into said chamber (4).
